# EUROPEAN PATENT APPLICATION

(11) **EP 1 223 332 A2**
(43) Date of publication of application: **17.07.2002**
(21) Application number: 01118880.2
(22) Date of filing: 16.08.2001
(51) Int. Cl.: F02M 31/02

(54) **Heating device and engine drive method**

(30) Priority: 16.01.2001 JP 2001007243
(71) Applicant: Hitachi, Ltd., Chiyoda-ku, Tokyo 101-8010 (JP)
(72) Inventor: Kanekawa, Nobuyasu, Hitachi-shi, Ibaraki 316-0025 (JP); Sakurai, Kohei, Hitachi-shi, Ibaraki 319-1225 (JP); Watabe, Mitsuru, Naka-gun, Ibaraki 319-2104 (JP); Sasaki, Shoji, Hitachinaka-shi, Ibaraki 312-0012 (JP); Tabuchi, Kenji, Hitachinaka-shi, Ibaraki 312-0062 (JP); Hayashibara, Toshio, Hitachinaka-shi, Ibaraki 312-0012 (JP)
(74) Representative: Beetz & Partner Patentanwälte

(57) **Abstract**

A heating device is capable of efficiently heat a heated body as heating object. The heating device includes a heating body (1), a power source (5) for supplying a current to the heating body (1), a current control element (4) controlling current flowing through the heating body (1), and a heat conductive body (2) to be thermally coupled with the heating body (1) and the current control element (4) for transmitting heat generated by the heating body (1) and heat generated by the current control element (4) to a heating object.

## Description

### BACKGROUND OF THE INVENTION

The present invention relates to a novel heating device, a drive method and a device of an engine, an air intake module for an internal combustion engine or a member thereof.

For industrial application and consumer application, heating devices are used widely. Such heating device is often controlled by a control unit so that a heating object can be maintained within a predetermined temperature range. As an example of the heating device and the control unit, there is a heater for an oxygen sensor as disclosed in Japanese Patent Application Laid-Open No. Heisei 10 -332628(1999). With the disclosed prior art, a current flowing through the heating device (heater) is controlled ON and OFF at a predetermined duty cycle by the control unit to prevent excessive heating of the heating device (heater) for protecting oxygen sensor and quickly activating the oxygen sensor by elevating temperature thereof.

On the other hand, U. S. Patent No. 5,894,832 discloses a cold start device for reducing hydrocarbon (HC) in an exhaust gas by heating an air/fuel mixture.

Also, Japanese Patent Application Laid-Open No. Heisei 6-231807(1994) discloses a battery heating device having a having a heating device provided with a transmission means for transmitting a waste heat of a combustion heater to the battery. Also, Japanese Patent Application Laid-Open No. Heisei 3-70625(1991) discloses transmission of heating generated by power loss of a blower motor control transistor of an automotive humidifier to a heat radiation plate within a vessel.

However, in the foregoing prior art, further sufficient consideration is necessary for effective use of heat radiation of the control unit, and further heat generated by the control unit. In the prior art disclosed in the foregoing Japanese Patent Application Laid-Open No. Heisei 10-332628, for greater amount of heat generated by the heating device or greater current flowing through the heating device, amount of heat to be generated in a current control element in the control unit can be made greater proportionally. As a result, as shown in Fig. 15, large heat generator becomes necessary for radiating head in the current control element. Also, the heat generated in the current control element is wastefully radiated to the ambient air through the heat radiator.

On the other hand, as shown in Fig. 7 of U. S. Patent No. 5,894,832, a fuel heater forming a cold start device is heated by a heater switch driver and a heater switch controlled by an engine control unit (ECU). In this case, since large current flows through the fuel heater forming the cold start device, amount of heat generated in the header switch driver and the heater switch becomes significant. On the other hand, by replacing the heater switch with an electronic element (current control element), longer life can be attained. However, in such case, heat generation amount of the current control element becomes large to require large heat radiator for radiating generated heat. Furthermore, the heat generated by the current control element is wastefully radiated to the ambient air.

### SUMMARY OF THE INVENTION

The present invention has been worked out the shortcoming in the prior art. Therefore, it is an object of the present invention to provide a heating device, in which a current control element controlling a current flowing through a heater body forming a heating device is thermally coupled with a heat conductive body together with the heater body for transmitting heat generated by both of the heater body and the current control element to the heat conductive body to efficiently heat a heated body as heating object.

According to the first aspect of the present invention, a heating device comprises:
a heating body;
a power source for supplying a current to the heating body;
a current control element controlling current flowing through the heating body; and
a heat conductive body to be thermally coupled with the heating body and the current control element for transmitting heat generated by the heating body and heat generated by the current control element to a heating object.

According to the second aspect of the present invention, a drive method for an engine branching an intake air to be supplied to a collector across an air adjusting valve into a plurality of intake air passage in an intake manifold for supplying into each engine cylinder, injecting fuel into intake air flow for driving the engine, the method comprises steps of:
injecting fuel into an air flow to be supplied to the collector for forming an air/fuel mixture;
heating the air/fuel mixture within the collector; and
introducing heated air/fuel mixture into each engine cylinder of the engine.

According to the third aspect of the present invention, a drive method for an engine branching an intake air to be supplied to a collector across an air adjusting valve into a plurality of intake air passage in an intake manifold for supplying into each engine cylinder, injecting fuel into intake air flow for driving the engine, and detecting oxygen concentration in an exhaust gas by means of an oxygen sensor, the method comprises steps of:
injecting fuel into an air flow to be supplied to the collector for forming an air/fuel mixture;
heating the air/fuel mixture within the collector;
introducing heated air/fuel mixture into each engine cylinder of the engine; and
detecting oxygen concentration in the exhaust gas with heating the oxygen sensor.

According to the fourth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, the system comprises:
at least one fuel injector provided in the collector for injecting fuel into the collector for forming an air/fuel mixture; and
a heating device provided in the collector for heating the air/fuel mixture within the collector.

According to the fifth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, the system comprises:
at least one fuel injector provided in the collector for injecting fuel into the collector for forming an air/fuel mixture;
a heating device provided in the collector for heating the air/fuel mixture within the collector; and
a current control element provided in the collector for controlling current to be supplied to the heating device.

According to the sixth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, and detecting oxygen concentration in an exhaust gas by means of an oxygen sensor, the system comprises:
at least one fuel injector provided in the collector for injecting fuel into the collector for forming an air/fuel mixture;
a first heating device provided in the collector for heating the air/fuel mixture within the collector; and
a first current control element provided in the collector for controlling current to be supplied to the heating device;
a second heating device provided in the oxygen sensor for heating a sensor element in the oxygen sensor; and
a second current control element provided in the oxygen sensor for controlling current to be supplied to the second heating device.

According to the seventh aspect of the present invention, an air intake module for an internal combustion engine comprises:
a collector;
a throttle valve assembly connected to the collector;
an intake manifold connected with the collector for introducing intake air into each engine cylinder;
a fuel injector provided in the collector for injecting fuel toward an intake air flow in the collector for forming an air/fuel mixture;
a heating device provided in the collector for heating the air/fuel mixture; and
a current control element provided in the collector for controlling current to be supplied to the heating device.

According to the eighth aspect of the present invention, an air intake module for an internal combustion engine comprises :
a collector;
a throttle valve assembly connected to the collector;
an intake manifold connected with the collector for introducing intake air into each engine cylinder;
a fuel injector injecting fuel supplied into the intake manifold;
a heating device provided in the fuel injector for heating the air/fuel mixture; and
a current control element provided in the fuel injector for controlling current to be supplied to the heating device.

According to the ninth aspect of the present invention, an air intake module for an internal combustion engine including an intake manifold having air intake passages arranged in parallel to a collector, comprises:
a mounting portion of a fuel injector injecting fuel to intake air supplied into the collector or the intake manifold, for forming an air/fuel mixture;
a mounting portion of a heating device for heating the air/fuel mixture; and
a mounting portion of a current control element for controlling current of the heating device.

According to the tenth aspect of the present invention, an air intake module for an internal combustion engine including an intake manifold having air intake passages arranged in parallel to a collector,
the collector or the intake manifold having a polygonal section perpendicular to a longitudinal direction with a plurality of planar surface in part.

According to the eleventh aspect of the present invention, a cold start device for an internal combustion engine comprises:
an idle air introducing pipe having an air inlet at upstream side of a throttle valve provided in an air intake passage;
a fuel injector for injecting fuel into intake air introduced into the idle air introducing pipe;
a heating chamber mixing the injected fuel and the intake air for forming an air/fuel mixture for heating the air/fuel mixture;
a heating element provided in the heating chamber for heating the air/fuel mixture; and
a current control element provided in the heating chamber for controlling current flowing through the heating element.

According to the twelfth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, the system comprises:
an idle air introducing pipe having an air inlet at upstream side of a throttle valve provided in an air intake passage;
a fuel injector for injecting fuel into intake air introduced into the idle air introducing pipe;
a heating chamber mixing the injected fuel and the intake air for forming an air/fuel mixture for heating the air/fuel mixture;
a heating element provided in the heating chamber for heating the air/fuel mixture; and
a current control element provided in the heating chamber for controlling current flowing through the heating element.

According to the thirteenth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, and detecting oxygen concentration in an exhaust gas by means of an oxygen sensor, the system comprises:
an idle air introducing pipe having an air inlet at upstream side of a throttle valve provided in an air intake passage;
a fuel injector for injecting fuel into intake air introduced into the idle air introducing pipe;
a heating chamber mixing the injected fuel and the intake air for forming an air/fuel mixture for heating the air/fuel mixture;
a first heating element provided in the heating chamber for heating the air/fuel mixture;
a first current control element provided in the heating chamber for controlling current flowing through the heating element;
a second heating device provided in the oxygen sensor for heating a sensor element in the oxygen sensor; and
a second current control element provided in the oxygen sensor for controlling current to be supplied to the second heating device.

According to the fourteenth aspect of the present invention, a drive method for an engine branching an intake air to be supplied to a collector across an air adjusting valve into a plurality of intake air passage in an intake manifold for supplying into each engine cylinder, injecting fuel into intake air flow for driving the engine, and detecting oxygen concentration in an exhaust gas by means of an oxygen sensor, the method for driving the engine in cold start condition, comprises steps of:
injecting fuel into an air flow to be supplied to the collector for forming an air/fuel mixture;
heating the air/fuel mixture within the collector;
introducing heated air/fuel mixture into each engine cylinder of the engine; and
detecting oxygen concentration in the exhaust gas with heating the oxygen sensor.

According to the fifteenth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, the system being active at cold starting of the engine, comprising:
at least one fuel injector provided in the collector for injecting fuel into the collector for forming an air/fuel mixture; and
a heating device provided in the collector for heating the air/fuel mixture within the collector.

According to the sixteenth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, the system being active at cold starting of the engine, comprises:
at least one fuel injector provided in the collector for injecting fuel into the collector for forming an air/fuel mixture;
a heating device provided in the collector for heating the air/fuel mixture within the collector; and
a current control element provided in the collector for controlling current to be supplied to the heating device.

According to the seventeenth aspect of the present invention, an engine driving system branching an intake air to be supplied to a collector across an air adjusting valve into a plurality of intake air passage in an intake manifold for supplying into each engine cylinder, injecting fuel into intake air flow for driving the engine, and detecting oxygen concentration in an exhaust gas by means of an oxygen sensor, the system being active at cold starting of the engine, comprises :
at least one fuel injector provided in the collector for injecting fuel into the collector for forming an air/fuel mixture;
a first heating device provided in the collector for heating the air/fuel mixture within the collector; and
a first current control element provided in the collector for controlling current to be supplied to the heating device;
a second heating device provided in the oxygen sensor for heating a sensor element in the oxygen sensor; and
a second current control element provided in the oxygen sensor for controlling current to be supplied to the second heating device.

According to the eighteenth aspect of the present invention, an air intake module for an internal combustion engine comprises:
a collector;
a throttle valve assembly connected to the collector;
an intake manifold connected with the collector for introducing intake air into each engine cylinder;
a fuel injector injecting fuel supplied into the intake manifold;
a heat conductive body defining a passage for the air/fuel mixture;
a heating device thermally coupled with the heat conductive body and generating heat to be transferred to the heat conductive body; and
a current control element for controlling current to be supplied to the heating device and thermally coupled with the heat conductive body for transferring head generated therein to the heat conductive body.

It should be noted that, in the air intake module for the internal combustion engine, the collector is provided with a tilted portion tilted at an angle greater than or equal to 45° in upward direction on the side of the electronically controlled throttle assembly. A diameter of the diameter of the titled portion is smaller than a diameter on the side of the intake manifold. The collector and the intake manifold are formed with a fiber reinforced synthetic resin. The intake manifold is integrated by partial fitting. The intake manifold is at least separated into two segments on the engine side and the collector side. The collector and the portion of the intake manifold on the side of the collector are formed with fiber reinforced synthetic resin, and the portion of the intake manifold on the side of the engine is preferably formed with aluminum diecast.

In the present invention, heat generated by the current control element is transmitted through the heat conductive body to be transmitted to the heating object together with heat generated by the heating body. Since heat generated by the current control element is transferred to the heating object, it becomes unnecessary to provide particular heat radiator for the current control element.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is a block diagram showing a basic construction of a heating device according to the present invention;
Fig. 2 is a block diagram employing a field effect transistor as a current control element for the heating device according to the present invention;
Fig. 3 is a block diagram of an embodiment, in which a control unit is incorporated in the heating device according to the present invention;
Figs. 4(a) is a front elevation showing a particular example of a cold start device;
Fig. 4(b) is a section taken along line A - A of Fig. 4(a)
Fig. 5 is a section of a heating body 1;
Fig. 6 is a section of a current control element;
Fig. 7 is a block diagram having another embodiment, in which two current control elements are included in the heating device according to the present invention;
Fig. 8 is a current profile chart of the cold start device and an oxygen sensor;
Fig. 9 is a constructional illustration of an engine with the heating device according to the present invention;
Fig. 10 is a constructional illustration of the engine with the heating device according to the present invention;
Fig. 11 is a perspective view of an engine system to be an object to apply an air intake module for an internal combustion engine in an automotive internal combustion engine employing the heating device according to the present invention;
Fig. 12 is a partial section of Fig. 10 showing the engine system to be an object to apply an air intake module for an internal combustion engine in an automotive internal combustion engine employing the heating device according to the present invention;
Fig. 13 is a section on the side of an electronically controlled throttle device installed the heating device and a current control element according to the present invention;
Figs. 14(a), 14(b), 14(c) and 14(d) are sections of an oxygen sensor having the heating device according to the present invention; and
Fig. 15 is a block diagram of the conventional heating device.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structure are not shown in detail in order to avoid unnecessary obscurity of the present invention.

### (First Embodiment)

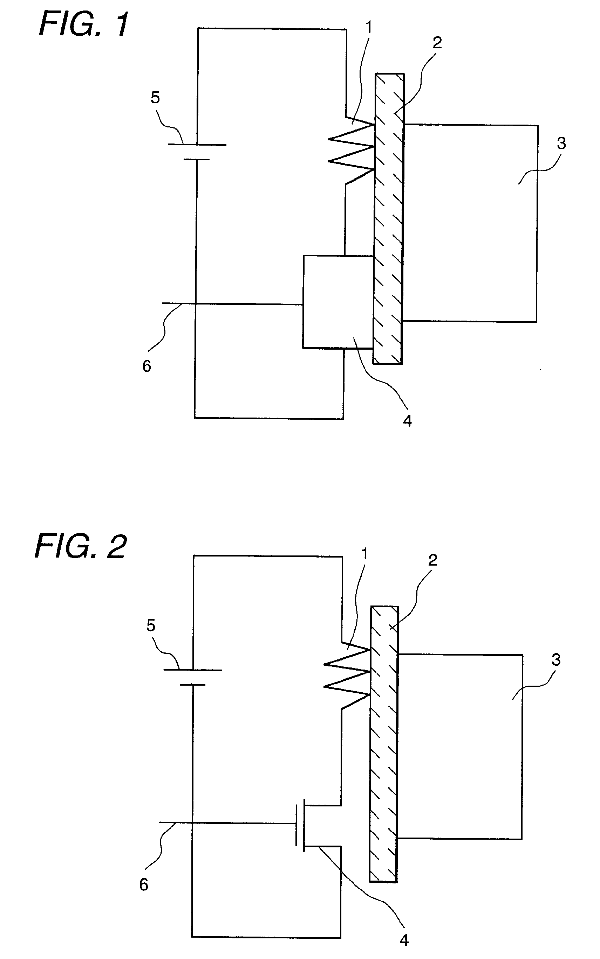

Fig. 1 is a block diagram showing a construction of a heating device according to the present invention. A heating body 1 is electrically controlled to a power source 5 via a current control element 4. The current control element 4 controls a current flowing through the heating body 1 on the basis of a control signal line 6. The heating body 1 and the current control element 4 are thermally coupled with a heat conductive body 2. The heat conductive body 2 is thermally coupled with a heating object 3. Namely, the heating body 1 and the current control element 4 are thermally coupled to the heating object 3 via the heat conductive body 2.

With the shown embodiment, not only heat generated by the heating body 1 but also heat generated by the current control element 4 are transmitted to the heating body 3 to contribute for heating of the heating object 1. Namely, the heat generated by the current control element 4 wastefully radiated to the environment in the prior art can be used in heating the heating object 3 to result in effective use of energy. Furthermore, it does not require heat radiator for radiating the heat of the current control element 4 to permit simplification of the control unit.

### (Second Embodiment)

Fig. 2 is a block diagram showing an embodiment, in which a field effect transistor is employed as the current control element 4. In addition, bipolar transistor, thyristor, magnetic amplifier and so forth may also be used as the current control element 4. On the other hand, processes has to be selectively used depending upon target heating temperatures of the heating object. For example, in case of the field effect transistor, when the target heating temperature is lower than or equal to 150 °C to 175 °C, normal bulk process can be used. When the target heating temperature is in a range between about 150 °C to about 225 °C, SOI (silicon on insulator) process is used. When the target heating temperature is higher than about 225 °C, silicon carbide (SiC) process can be used.

On the other hand, it is typical to improve energy efficiency and facilitate heat radiation by lowering turn ON-resistance of the current control element 4 for reducing loss namely heat on the current control element 4. However, by using heat generated by the current control element 4 for heating the heating object 3 as in the present invention, even if loss namely heat generation in the current control element 4 is large, loss namely heat can be efficiently used for heating the heating object 3 and thus is not necessary for lower the turn ON resistance of the current control element 4. Namely, in order to lower turn ON resistance, it becomes unnecessary to make the size of the current control element 4 larger to lower price of the current control element 4.

### (Third Embodiment)

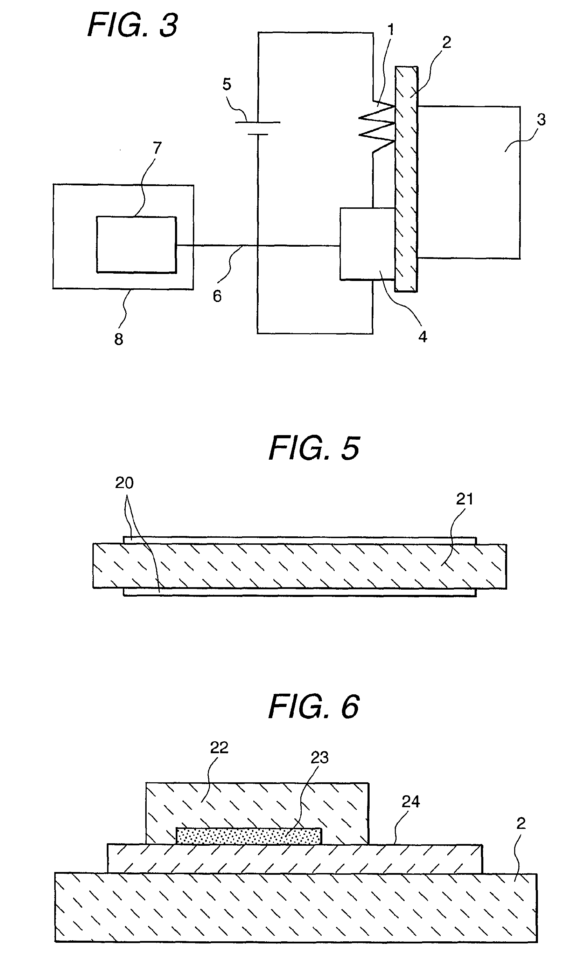

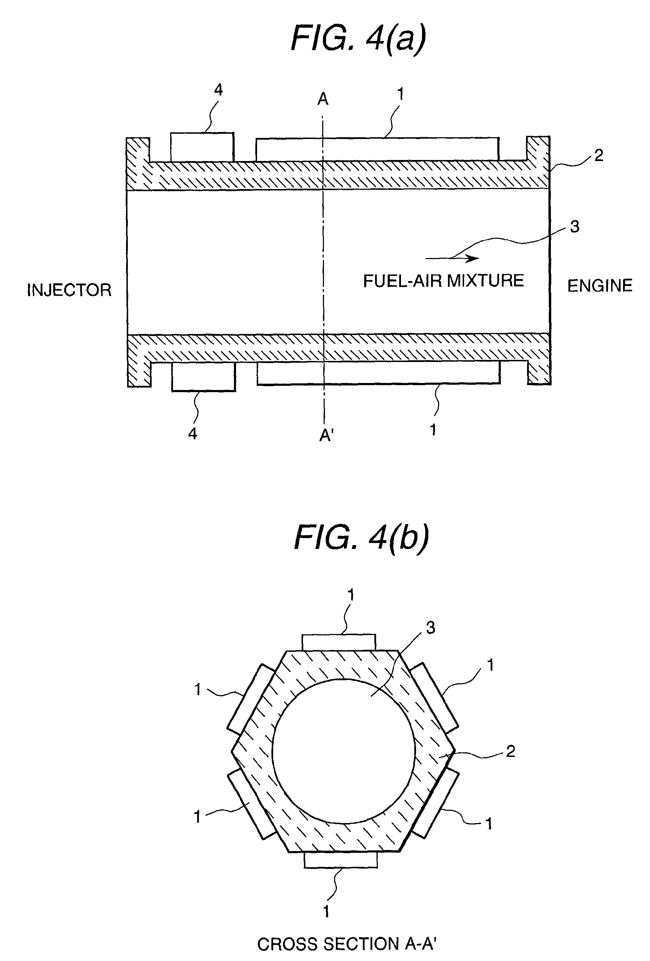

Fig. 3 is a block diagram for controlling the current control element 4 by a control signal output from a control unit 8 having a control function 7 and fed through a control signal line 6. In the shown embodiment, heat generated by the current control element 4 which has been wastefully radiated to the environment conventionally, can be used for heating the heating object 3 to improve energy use efficiency. In addition, it becomes unnecessary to provide a heat radiator for cooling the current control element 4. This permits the control unit 8 to be small and light weight for lowering of cost.

### (Fourth Embodiment)

Figs. 4(a) and 4(b) are front elevation and section of a construction applied the heating device according to the present invention to an air intake pipe of an automotive vehicle, as a cold start device, in which Fig. 4(a) is a front elevation and Fig. 4(b) is a section taken along line A - A of Fig. 4(a). The cold start device is a device for promoting vapor of fuel by heating the air intake pipe immediately after an injector (fuel injection valve) immediately after starting up of the engine and under cold condition of the air intake system, and preventing discharge of unburnt exhaust gas (hydrocarbon: HC) due to adhering of fuel on a peripheral wall.

As shown in Figs. 4(a) and 4(b), the cold start device is constructed by fitting heating bodies 1 on each planar surfaces of a portion of the air take pipe which portion is formed into hexagonal shape with a heat conductive body 2. Furthermore, by the present invention, the current control element 4 is fitted on a portion of the air intake pipe formed with the heat conductive body 2. The air intake pipe is formed with a metal, such as iron, aluminum, magnesium alloy or the like as conventionally known in the art. Since such metallic air intake pipe has high thermal conductivity coefficient and thus can be used as heat conductive body 2 as is. Since study of high polymer is in progress, when heat conductive high polymer is put into practice, heat conductive high polymer material may be preferred for better forming ability and workability. The cold start device according to the present invention is constructed by forming a portion of the air intake pipe as heat conductive body into a polyhedral shape and fitting the heating body 1 and the current control element 4 on each planar surfaces of the polyhedral body. In the shown embodiment, not only heat generated by the heating body but also heat generated by the current control element 4 are transmitted to the heating object, air/fuel mixture in the shown case, to effectively use heat of the heating body 1 and the current control element 4 for heating the heating object 3 (air/fuel mixture). On the other hand, by arranging the current control element at upstream side of the heating body 1 where temperature is lower than that at the position where the heating body is arranged, operation temperature of the current control element 4 can be lowered to permit implementation of the present invention without requiring special process for high temperature operation, such as SIO or the like as set forth above.

Fig. 5 is a section of the heating body 1. As can be seen from Fig. 5, the heating body 1 is formed by forming electrodes 20 of a heat resistive metal film, such as Mo, W, Pt or the like on a quadrangular surface of a sintered resistor body 21 of barium titanate, and entire surface is covered with an alumina film. To the electrode 20, a lead terminal for externally supplying power source is connected.

Fig. 6 is a section of the current control element. A semiconductor element 23 is fitted on a copper heat radiation plate 24 through an insulator, and then sealed with an epoxy resin 22. A pre-assembly of the semiconductor element 23, the heat radiation plate 24 and the epoxy resin 22 is mounted on a heat conductive body 2. As the current control element, bipolar transistor, power MOSFET or the like are used. As shown in Fig. 6, for radiation of heat from the semiconductor element 23, the head conductive body 2 may serve as replacement for the heat radiation plate for effectively using thermal energy.

### (Fifth Embodiment)

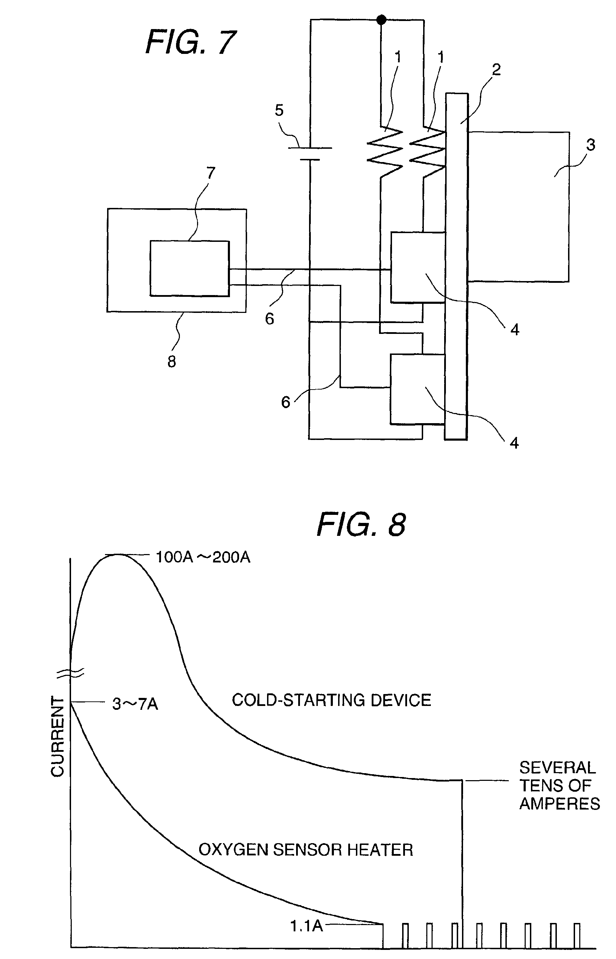

Fig. 7 is a block diagram of the fifth embodiment, in which, in addition to the current control element 4 for controlling a current for the heating body 1, a current control element 4' controlling a current for a heating body 1' is also thermally coupled with the heat conductive body 2 and the head conductive body 2 is thermally coupled with the heating object 3. With the shown embodiment, not only heat generated by the current control element 4 but also heat generated by the current control element 4' may be used for heating the heating object 3 to further improve energy using efficiency. Particularly, the shown construction may achieve particularly good effect to use the heating device constructed with the heating body 1 and the heat conductive body 2 as the cold start device as set forth above, and to use the heating body 1' as an oxygen sensor heater.

As shown in Fig. 8, supply current, namely heat generation amount of the cold start device and the oxygen sensor heater are both become maximum immediately after starting up of the engine in cold engine condition. Accordingly, immediately after cold starting of the engine, heat generation amount of the current control element 4 and the current control element 4' also become maximum. Comparable effect may also be obtained even when the heating device constituted of the heating body 1 and the head conductive body, is used as the oxygen sensor heater and the heating body 1' is used as the cold start device. In such case, immediately after starting up of the engine in cold engine condition, heat generation amount of the current control element 4 and the current control element 4' becomes maximum to efficiently heat the oxygen sensor as heating object 3.

### (Sixth Embodiment)

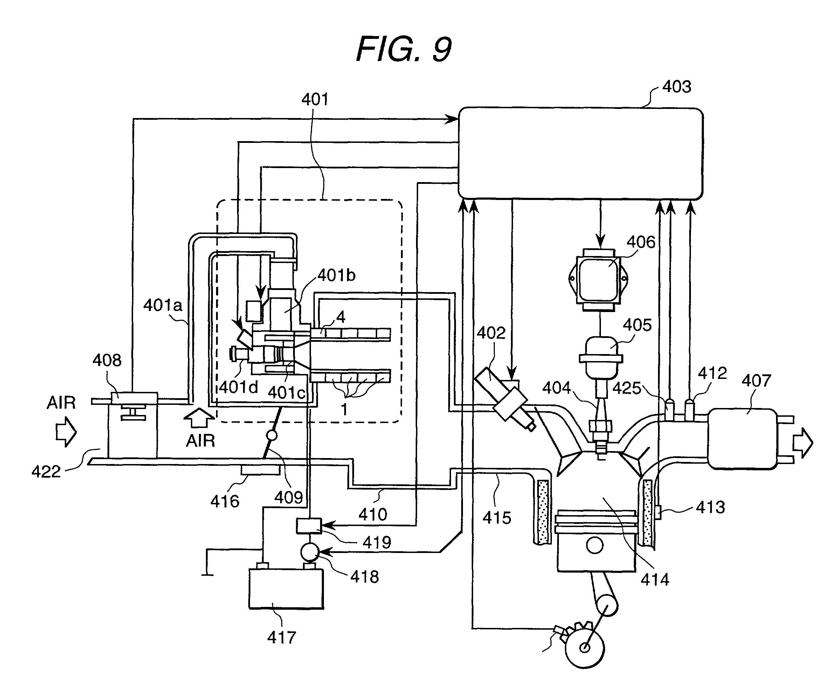

Fig. 9 shows an overall construction of a particular internal combustion engine, in which the cold start device according to the present invention is applied. An intake manifold 410 is connected to one end of an air intake supplying an intake air as indicated by arrow on the left side in Fig. 9. An air cleaner (not shown) may be provided in the air intake. A mass air flow sensor 4 is disposed within an air intake passage 422 defined in the air intake. A throttle valve 409 is provided within the air intake passage 422. The throttle valve 409 is rotatably supported on a throttle shaft. A throttle valve angular position is detected by a throttle position sensor 416. The throttle valve 409, the throttle shaft and the throttle position sensor 416 are generally referred to as throttle assembly. An idle air passage 401a is communicated with the air intake passage 422 at a position between the mass air flow sensor 408b and the throttle assembly, for introducing part of the intake air into a cold start device 1. Under cold start condition, intake air to be introduced into the intake manifold 410 is mixed with fuel injected from a fuel injection valve 401d in the cold start device 401, and under engine operating condition other than cold start condition, fuel is injected by a multi-port fuel injection valve 402.

Upon combustion, exhaust gas is discharged from combustion chambers 414 through an exhaust passage via a lambda type O₂ sensor 412 and a catalytic converter 407. In addition, an exhaust temperature sensor 425 is provided at upstream side of the catalytic converter 407 disposed in the exhaust passage for measuring a temperature of exhaust gas discharged from the combustion chambers 414.

The engine control unit (ECU) 3 monitors operating condition of the engine by various sensors, such as the mass air flow sensor 4, the throttle position sensor 416, a crank angle sensor 411, the O₂ sensor, the exhaust temperature sensor 425, an engine coolant temperature sensor 413 mounted in an engine jacket, a ammeter 418 connected to a battery 417 and so forth.

The ECU 3 uses sensor input for feedback control of the engine. For example, the ECU 3 controls pulse signal to be fed to the fuel injection valve 401d in the cold start device 401 or the fuel injection valve 402 for controlling a fuel supply amount to the intake manifold. The ECU 3 also controls trigger timing of ignition plugs 404 through an ignition module 406 and a distributor 405. The ECU 3 further controls operation of a heater switch 419 for supply current to the heater of the cold start device 401. The heater switch 419 is a mechanically operable switch, such as relay, solenoid or the like. However, the heater switch 419 may be constructed with a semiconductor switch. In the preferred embodiment, the semiconductor switch having peak current at about 300A and current in a range of 80 to 100A in steady state.

The cold start device 401 includes a casing including the fuel injection valve 401d having a fuel inlet or an orifice. Idle air introduced through the idle air passage 401a branched from the air intake passage, is introduced at a controlled amount by an idle speed control valve 401b and is then introduced into an idle air mixer 401c to be mixed with the fuel injection valve 401d at the outlet or orifice to form air/fuel mixture. Fuel thus injected from the fuel injection valve 401d is promoted atomization as mixed with the idle air.

Air/fuel mixture thus formed flows into the intake manifold the heating body 1 and the current control element 4. The heating body 1 is formed into a cylindrical shape. The heating body 1 may be formed by arranging a plurality of individual heater segments on the outer periphery. Air/fuel mixture flowing through the heating body 1 and the current control element 4 is heated at a temperature in a range of 120 to 200 °C to be further promoted atomization for complete atomization. Air/fuel mixture is then introduced into the combustion chamber 414. The heating body 1 and the current control element 4 are constructed in a construction set forth in connection with the first to fifth embodiments.

### (Seventh Embodiment)

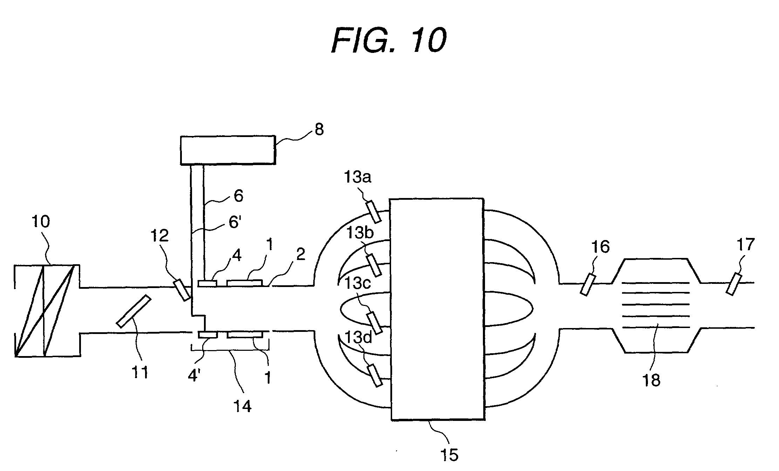

Fig. 10 is a constructional illustration of an engine control system, in which the heating device is provided on the oxygen sensors for intake system and exhaust system of the engine. Air introduced into the air intake system via an air cleaner 10 and a throttle valve 11 is mixed with fuel injected through a group of fuel injection valves 12a to 12d each adapted for fuel injection for each individual combustion chamber in the engine for forming air/fuel mixture. Then, air/fuel mixture is introduced into each combustion chamber in the engine 15 through corresponding intake port. While the shown embodiment is directed to four-cylinder engine, the invention is also applicable for engines having n in number of cylinders. In such case, n in number of fuel injection valves are to be provided. Air/fuel mixture thus introduced into respective combustion chambers of the engine 15 is burnt therein, and exhaust gas resulting from burning of the mixture is discharged through exhaust ports. Exhaust gas flows through the exhaust passage across an oxygen sensor 16, a catalytic converter 18 and a not shown muffler to be discharged into ambient air. The oxygen sensor 16 is designed to monitor oxygen concentration in exhaust gas and provides oxygen concentration indicative signal representative of air/fuel ratio and is used for feedback control (λ control) of fuel injection amount. For diagnosis of catalytic converter 18, another oxygen sensor 17 may be provided at downstream side of the catalytic converter 18 as shown in Fig. 10.

Immediately after starting up the engine under cold engine condition, fuel is injected from the fuel injection valves 12 instead of the fuel injection valves 12a to 12d, for forming air/fuel mixture at upstream side of the intake manifold and then is heated by the heating device 14 (cold start device) constructed with the heating body 1 and the current control element 4 for promoting atomization of fuel for reducing amount of fuel to be introduced into the combustion engine in incompletely atomized form due to adhesion of fuel on the peripheral wall of the air intake, resulting in unburnt exhaust gas (hydrocarbon: HC). When temperature of the induction system is elevated or when temperature of the engine temperature (engine coolant temperature) is elevated, the operation of the heating device (cold start device) 14 is terminated. Then, fuel injection from the fuel injection valve 12 is terminated and fuel is injected from the fuel injection valves 12a to 12d for each engine cylinders. The heating body 1 includes a plurality of the heating devices 14, each formed into quadrangular shape and are directly fitted on a portion of the air intake passage downstream of the throttle valve 11 connected to a collector together with the current control element 4.

The current control element 4 turns ON and OFF current to be supplied to the heating bodies 1 forming the heating device (cold start device) 14, at a predetermined duty cycle on the basis of a command from the control unit 8 through the control signal line 6 for controlling current flowing through the oxygen sensor heaters 16 and 17 and whereby controlling amount of heat to be generated. It should be noted that, in the embodiment set forth above, wiring connecting between the power source 5 and the current control elements 4 and 4' and between the heating bodies 1 and 1' and the power source 5 are eliminated from illustration. The current control element 4 is constructed with the semiconductor device shown in Fig. 6.

On the other hand, an air intake module for internal combustion engine in the preferred embodiment is formed with not only parts of air induction system but also a part of fuel system, ECU 260, various harnesses in electric system, into one module (concentrating and forming into a unit) as much as possible for contributing rationalization of automotive vehicle assembling operation, rationalization of transportation, down-sizing, improvement installation ability, lowering of manufacturing cost, lowering of resistance of wire harnesses, and lowering of noise. For this purpose, the following consideration has been given.

An intake manifold 202 (202a to 202a) and a collector (not shown) are integrally molded with a fiber reinforced synthetic resin containing glass fiber having superior heat resistance and mechanical strength in a range of 20 to 40 Wt%, preferably about 30 Wt%. As synthetic resin, thermoplastic resin, such as epoxy resin, polyacetal resin, nylon resin, polyethylene terephthalate resin, polybutylene terephthalate resin and the like may be used. On the other hand, reinforcement fiber may be not only glass fiber but also ceramic fiber, metal fiber, carbon fiber and so forth.

The intake manifold 202 is preferably formed by aluminum diecast with aluminum alloy corresponding to ADC12 under JIS standard. Aluminum alloy containing Si in amount of 4.5 to 13.0 % by weight and one of Cu, Mg, Zn, Fe, Mn, Ni in amount of 0.5 % by weight or Cu in amount of 1.0 to 4.0 % by weight may be used. The intake manifolds 202 of fiber reinforced synthetic resin is formed with flanges 314 having greater thickness of the wall of the main body, on the side of the collector. A connecting portion of the intake manifold 202 is connected to a flange having greater thickness of the wall of the main body of the collector through rubber connection pipes 204 fixed to respective flanges via spacer by metal bands 318.

The air intake module is not specified to the shown construction but can be of various other construction. For example, for the present invention, the air intake module disclosed in U. S. Patent No. 6,263,850 may be applicable. The disclosure of the above-identified U. S. Patent will be incorporated by reference for the sake of disclosure.

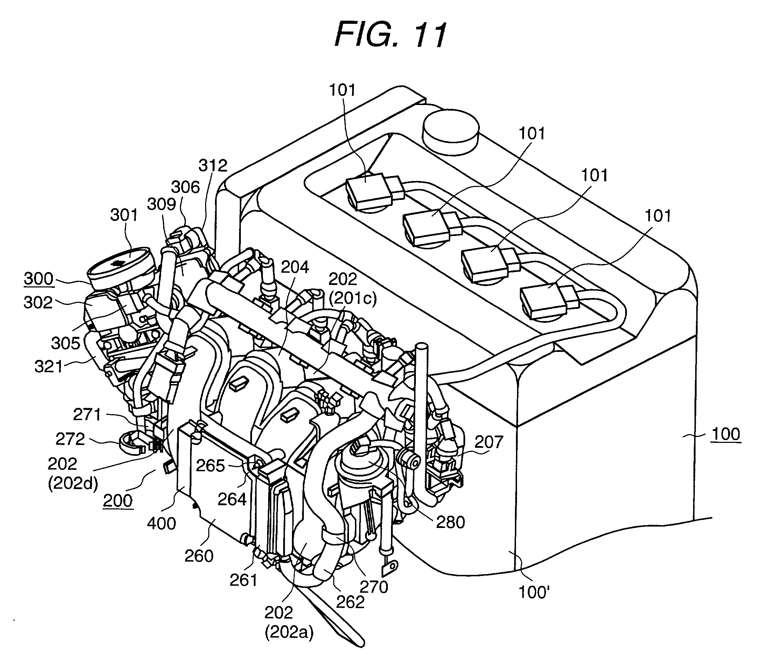

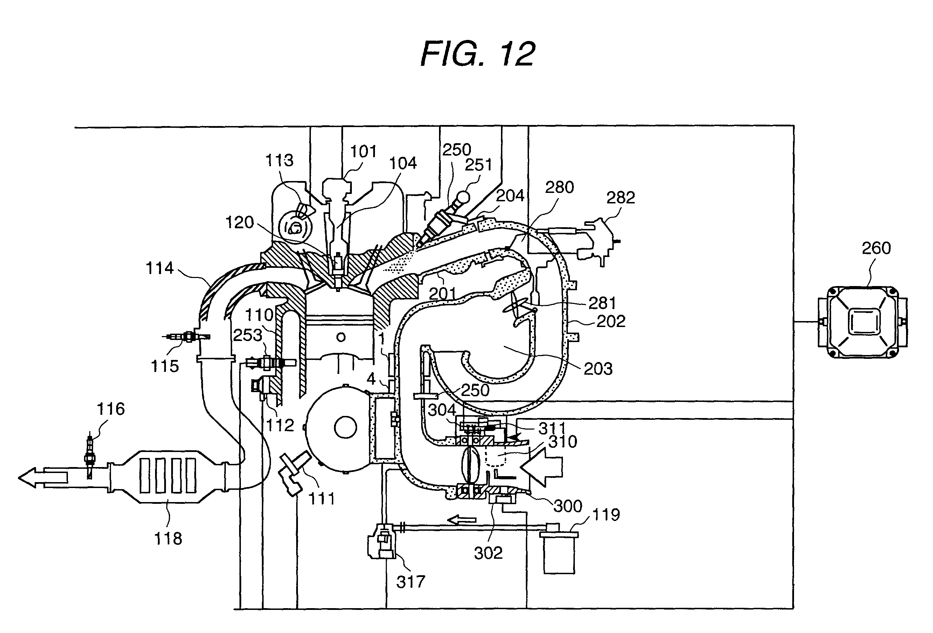

Fig. 12 is a partial section of the engine system illustrated in Fig. 10 to which the air intake module for an automotive internal combustion engine employing the heating device according to the present invention. The heating body 1 and the current control element 4 according to the present invention is provided on the side of the electronically controlled throttle device at the inlet of the collector, as shown in Fig. 11.

It should be noted that the engine block 100 has a plurality of cylinders 110 but only one cylinder is shown for the purpose of illustration. The reference numeral 202 denotes an independent air intake pipes forming the intake manifold. While only one air intake pipe 202 is shown, the intake manifold is constructed with a plurality of independent air intake pips of the number corresponding to number of the engine cylinders. Each independent air intake pipes 202 has a variable air intake value 281 actuated to open and close by a vacuum diaphragm 280. The engine control unit (ECU) 260 outputs a signal for switching a three-way solenoid 282 for controlling vacuum applied on the vacuum diaphragm 280 to actuate the variable air intake valve 281 for adjusting air intake path length adapting load condition of the engine. The reference numeral 203 denotes the collector (surge tank) located upstream side of the intake manifold, 300 denotes an electronically controlled throttle assembly.

In the electrically controlled throttle assembly 300, a throttle position sensor (hereinafter referred to as TPS) 304 for detecting open degree of the throttle valve is build-in as measuring system. Also, an air flow meter (hereinafter referred to as AFM) 302 is provided for detecting an intake air flow rate. ON the other hand, on the electrically controlled throttle assembly 300, a motor 310 and a gear 311 for controlling opening and closing the throttle valve.

The independent air intake pipes 202 are branched from the collector 203 and connected to intake ports of the engine cylinders 110. Intake air introduced into the air intake passage through not shown air cleaner is controlled flow rate thereof by the electronically controlled throttle assembly 300. Then, intake air reaches the collector 203 and then introduced into the engine cylinder in suction stroke through the independent air intake pipe 202 of the intake manifold.

A fuel injector (fuel injection valve)250 is arranged in the vicinity of intake port of the cylinder 100 for injecting fuel toward the intake valve based on the control signal from ECU 260. To the injector 250, fuel is supplied through a fuel gallery (fuel supply pipe) 251.

In the shown embodiment, independent ignition type ignition coil 104 is directly connected to an ignition plug 120 installed in the engine cylinder. The independent ignition type ignition coil 104 is installed within a plug hole and is coupled with an igniter unit (ignition driver circuit) 101. Spark ignition signal is directly set from the ECU time identifier to the igniter unit 101 for controlling spark ignition.

Sensors for providing control parameters for the ECU includes a crank angle sensor 110, a knock sensor for detecting knocking condition of the engine, cam angle sensor 113, an O₂ sensors 115 and 116 provided in an exhaust passage 114. The O₂ sensors 115 and 116 are adapted to detect O₂ concentration in the exhaust gas to output feedback signal for air/fuel ratio control. In addition, by providing the O₂ sensors at both of upstream and downstream sides of the catalytic converter, degradation of exhaust gas purification performance of the catalytic converter can be detected.

An engine coolant temperature sensor 253 is a sensor for detecting a temperature of the engine coolant. Detection signals of these sensors and AFM are input to ECU 260 through wire harnesses. ECU 260 has functions for deriving fuel supply amount, spark ignition timing or the like on the basis of various measurement signals and sensor signals.

A part of the engine coolant flows through a passage provided in a throttle body through a hot water piping for preventing the throttle valve or the like from freezing. High temperature water (engine coolant) is returned to an engine cooling portion via a reservoir tank and a return pipe.

A canister 119 is designed for collecting evaporated gas of a fuel tank. Evaporated gas collected by the canister 119 is fed to the collector 203 through a canister purge valve 317 and a canister purge pipe. The canister purge valve 317 is also controlled by the ECU 260.

Furthermore, in the electronically controlled throttle assembly 300, a crankcase emission control system (hereinafter referred to as Positive Crankcase Ventiration (PCV) valve) is used as PCV valve 322, and a fresh air feeding opening are provided. The PCV valve feeds back blow-by gas sucked from the cylinder head cover or a crank case to induction system. During low load condition where among of blow-by gas to be generated is small, suction force by vacuum pressure in the intake manifold becomes too strong to cause instability of the engine. Therefore, the PCV valve to be controlled path area thereof by manifold vacuum pressure is used. Blow-by gas is fed to downstream side of the throttle valve depending upon the engine load (intake air flow rate). At this time, fresh air is fed trough the fresh air feeding opening and hose connected thereto from the induction system at upstream side of the throttle valve for ventilation of cylinder head cover or crank case.

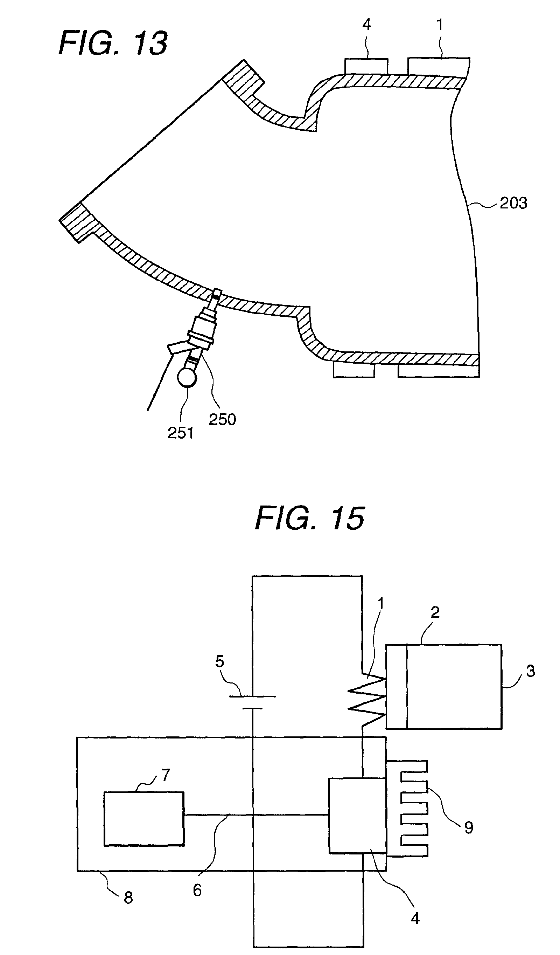

Fig. 13 is a section of an injector, the heating device and the collector on the side of an electronically controlled throttle assembly of an embodiment of the present invention. In the shown embodiment, the collector 203 on the side of the electronically controlled throttle assembly 300 is upwardly curved as shown in Fig. 13 and is tilted about 56° with respect to the center axis of the electronically controlled throttle assembly 300. As set forth above, by upwardly bending the collector 203, position to exert the weight of the electronically controlled throttle assembly 300 and installation position of the motor in heavy weight can be shifted to gravity center toward lower side to reduce weight load for contributing for reduction of weight. Furthermore, wiring and connector may be concentrated on the same side to permit down-sizing of the overall construction.

In the collector 203, the injector 250, the foregoing heating body 1 and the current control element 4 are provided on a portion formed in polyhedral shape as shown in Fig. 4. On the side where the electronically controlled throttle assembly 300 is mounted, the injector 250 is provided. Aportion of the collector 203 where the heating body 1 and the current control element 4 are provided, is formed into polyhedral shape in hexagonal shape. On each plane of the sectionally hexagonal portion of the collector, a plurality of heating devices 1 and the current control element 4 are provided. In addition to the shown embodiment, the inlet of the collector 203 may be in straight construction without tilting the inlet. As these heating devices 1 and the current control element 4, those shown in Figs. 5 and 6 are used. In the shown embodiment, in place of the heating body 2, the peripheral wall of the collector 203 is used. In the shown embodiment, air/fuel mixture is heated at a temperature in a range of 120 to 200 °C by the heating devices 1 and the current control element 4. In the preferred embodiment, the current control element 4 is constructed with SOI.

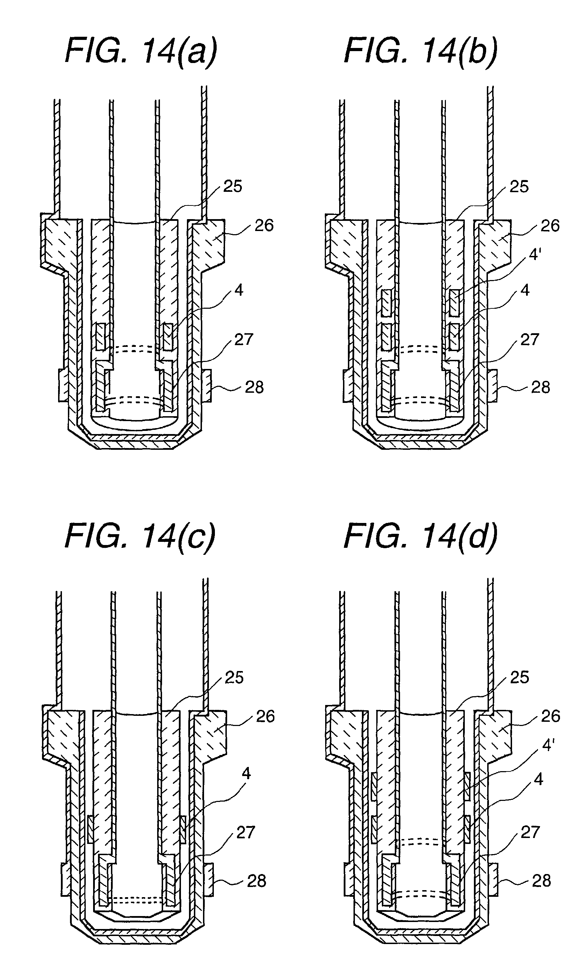

Figs. 14(a), 14(b), 14(c) and 14(d) are sections of the oxygen sensor having the heating bodies 1 and the current control element 4 according to the present invention. The oxygen sensors 115 and 116 in the shown embodiment are provided with heating bodies 1 and the current control element 4. The oxygen sensor includes a cylinder body 25 of alumina, bag body 26 of sintered zirconium, a heating thick film resistor 27 and a platinum electrode 28. In the embodiments illustrated in Figs. 4(a) and 4(b), both of the heating thick film resistor 27 and the current control elements 4, 4' are embedded in the cylindrical alumina 25. On the other hand, in the embodiment illustrated in Figs. 4(c) and 4(d), the heating thick film resistor 27 is embedded in the polyhedral alumina 25 and the current control element 4,4' are mounted on the outer periphery of the polyhedral alumina 25. In these embodiments, it is preferred that the current control element is formed with silicon carbide (SiC). In the shown embodiment, the heating temperature is about 90 °C.

With the embodiments set forth above, it becomes possible to improve heating efficiency of the cold start device in the engine control system. Discharge of hydrocarbon: HC in the unburnt exhaust gas immediately after starting up the engine in cold engine condition, can be certainly and successfully prevented.

Also, with the present invention, in the air intake module for the internal combustion engine for the automotive vehicle, since the motor and air flow meter can be arranged at an optimal; position relative to the electronically controlled throttle assembly to reduce weight load thereon to be loaded on the intake manifold and collector, the intake manifold and the collector may be formed of synthetic resin. This permits production of light weight and compact air intake module for the internal combustion engine. Furthermore, for optical arrangement of the components, lengths of wiring and piping can be minimized. In addition, by forming wiring as module, wiring operation can be simplified to contribute shortening manufacturing process. Furthermore, by forming wiring into the module, reliability of the wiring as well as overall system can be enhanced.

On the other hand, with the construction set forth above, packaging density of the air intake module for the internal combustion engine can be increased to permit simplification of assembling operation, achieving convenience in transportation, reduction of size and weight, and improve storing ability. Also, when the wire harnesses are packed into a module, length of the harnesses can be shortened to reduce resistance and enhance resistance against noise to further improve reliability.

As set forth above, with the present invention, since heat generated in the current control element can be transmitted to the heating object together with the heat generated by the heating body for heating the heating object. Therefore, not only heat generated by the heating body but also heat generated in the current control element may be used for heating the heating object. Therefore, it becomes unnecessary to provide heat radiator for radiation of heat generated by the current control element. Furthermore, since the heat generated by the current control element may used for improve energy efficiency to reduce size and weight of the heat radiator of the control unit.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. A heating device comprising:
a heating body (1);
a power source (5) for supplying a current to said heating body (1);
a current control element (4) controlling current flowing through said heating body (1); and
a heat conductive body (2) to be thermally coupled with said heating body (1) and said current control element (4) for transmitting heat generated by said heating body (1) and heat generated by said current control element (4) to a heating object (3).

2. A drive method for an engine branching an intake air to be supplied to a collector (203) across an air adjusting valve into a plurality of intake air passage (422) in an intake manifold (410; 202) for supplying into each engine cylinder, injecting fuel into intake air flow for driving the engine, the method comprising steps of:
injecting fuel into an air flow to be supplied to said collector (203) for forming an air/fuel mixture;
heating said air/fuel mixture within said collector (203); and
introducing heated air/fuel mixture into each engine cylinder of the engine.

3. A drive method for an engine branching an intake air to be supplied to a collector (203) across an air adjusting valve into a plurality of intake air passage (422) in an intake manifold (410; 202) for supplying into each engine cylinder, injecting fuel into intake air flow for driving the engine, and detecting oxygen concentration in an exhaust gas by means of an oxygen sensor (412; 115, 116), the method comprising steps of:
injecting fuel into an air flow to be supplied to said collector (203) for forming an air/fuel mixture;
heating said air/fuel mixture within said collector (203); introducing heated air/fuel mixture into each engine cylinder of the engine; and
detecting oxygen concentration in the exhaust gas with heating said oxygen sensor (412; 115, 116).

4. An engine driving system branching an intake air to be supplied to a collector (203) across an air adjusting valve into a plurality of intake air passage (422) in an intake manifold (410; 202) for supplying into each engine cylinder, injecting fuel into intake air flow for driving the engine, the system comprising:
at least one fuel injector (401d; 250) provided in said collector (203) for injecting fuel into said collector (203) for forming an air/fuel mixture; and
a heating device (1) provided in said collector (203) for heating said air/fuel mixture within said collector (203).

5. An engine driving system branching an intake air to be supplied to a collector (203) across an air adjusting valve into a plurality of intake air passage(422) in an intake manifold (410; 202) for supplying into each engine cylinder, injecting fuel into intake air flow for driving the engine, the system comprising:
at least one fuel injector (401d; 250) provided in said collector (203) for injecting fuel into said collector (203) for forming an air/fuel mixture;
a heating device (1) provided in said collector (203) for heating said air/fuel mixture within said collector (203); and
a current control element (4) provided in said collector (203) for controlling current to be supplied to said heating device (1).

6. An engine driving system branching an intake air to be supplied to a collector (203) across an air adjusting valve into a plurality of intake air passage (422) in an intake manifold (410; 202) for supplying into each engine cylinder, injecting fuel into intake air flow for driving the engine, and detecting oxygen concentration in an exhaust gas by means of an oxygen sensor (412; 115, 116), the system comprising:
at least one fuel injector (401d; 250) provided in said collector (203) for injecting fuel into said collector (203) for forming an air/fuel mixture;
a first heating device (1) provided in said collector (203) for heating said air/fuel mixture within said collector (203); and
a first current control element (4) provided in said collector (203) for controlling current to be supplied to said heating device (1);
a second heating device (1) provided in said oxygen sensor (412; 115, 116) for heating a sensor element in said oxygen sensor (412; 115, 116); and
a second current control element (4) provided in said oxygen sensor (412; 115, 116) for controlling current to be supplied to said second heating device (1).

7. An air intake module for an internal combustion engine comprising:
a collector (203);
a throttle valve assembly (300) connected to said collector (203); an intake manifold (202) connected with said collector (203) for introducing intake air into each engine cylinder (110);
a fuel injector (250) provided in said collector (203) for injecting fuel toward an intake air flow in said collector (203) for forming an air/fuel mixture;
a heating device (1) provided in said collector (203) for heating said air/fuel mixture; and
a current control element (4) provided in said collector (203) for controlling current to be supplied to said heating device (1).

8. An air intake module for an internal combustion engine comprising:
a collector (203);
a throttle valve assembly (300) connected to said collector (203); an intake manifold (202) connected with said collector (203) for introducing intake air into each engine cylinder (110);
a fuel injector (250) injecting fuel supplied into said intake manifold (202);
a heating device (1) provided in said fuel injector for heating said air/fuel mixture; and
a current control element (4) provided in said fuel injector for controlling current to be supplied to said heating device (1).

9. An air intake module for an internal combustion engine including an intake manifold (202) having air intake passages arranged in parallel to a collector (203), comprising:
a mounting portion of a fuel injector (250) injecting fuel to intake air supplied into said collector (203) or said intake manifold (202), for forming an air/fuel mixture;
a mounting portion of a heating device (1) for heating the air/fuel mixture; and
a mounting portion of a current control element (4) for controlling current of said heating device (1).

10. An air intake module for an internal combustion engine including an intake manifold (202) having air intake passages arranged in parallel to a collector (203),
said collector (203) or said intake manifold (202) having a polygonal section perpendicular to a longitudinal direction with a plurality of planar surface in part.

11. A cold start device for an internal combustion engine comprising:
an idle air introducing pipe having an air inlet at upstream side of a throttle valve (409) provided in an air intake passage (422);
a fuel injector (401d) for injecting fuel into intake air introduced into said idle air introducing pipe;
a heating chamber mixing the injected fuel and the intake air for forming an air/fuel mixture for heating the air/fuel mixture;
a heating element (1) provided in said heating chamber for heating the air/fuel mixture; and
a current control element (4) provided in said heating chamber for controlling current flowing through said heating element (1).

12. An engine driving system branching an intake air to be supplied to a collector (203) across an air adjusting valve into a plurality of intake air passage (422) in an intake manifold (410; 202) for supplying into each engine cylinder, injecting fuel into intake air flow for driving the engine, the system comprising:
an idle air introducing pipe having an air inlet at upstream side of a throttle valve (409) provided in an air intake passage (422);
a fuel injector (401d; 250) for injecting fuel into intake air introduced into said idle air introducing pipe;
a heating chamber mixing the injected fuel and the intake air for forming an air/fuel mixture for heating the air/fuel mixture;
a heating element (1) provided in said heating chamber for heating the air/fuel mixture; and
a current control element (4) provided in said heating chamber for controlling current flowing through said heating element (1).

13. An engine driving system branching an intake air to be supplied to a collector (203) across an air adjusting valve into a plurality of intake air passage (422) in an intake manifold (410; 202) for supplying into each engine cylinder, injecting fuel into intake air flow for driving the engine, and detecting oxygen concentration in an exhaust gas by means of an oxygen sensor (412; 115, 116), the system comprising:
an idle air introducing pipe having an air inlet at upstream side of a throttle valve (409) provided in an air intake passage (422);
a fuel injector (401d; 250) for injecting fuel into intake air introduced into said idle air introducing pipe;
a heating chamber mixing the injecting fuel and the intake air for forming an air/fuel mixture for heating the air/fuel mixture;
a first heating element (1) provided in said heating chamber for heating the air/fuel mixture;
a first current control element (4) provided in said heating chamber for controlling current flowing through said heating element (1);
a second heating device (1) provided in said oxygen sensor (412; 115, 116) for heating a sensor element in said oxygen sensor (412; 115, 116); and
a second current control element (4) provided in said oxygen sensor (412; 115, 116) for controlling current to be supplied to said second heating device (1).

14. A drive method for an engine branching an intake air to be supplied to a collector (203) across an air adjusting valve into a plurality of intake air passage (422) in an intake manifold (410; 202) for supplying into each engine cylinder, injecting fuel into intake air flow for driving the engine, and detecting oxygen concentration in an exhaust gas by means of an oxygen sensor (412; 115, 116), the method for driving the engine in cold start condition, comprising steps of:
injecting fuel into an air flow to be supplied to said collector (203) for forming an air/fuel mixture;
heating said air/fuel mixture within said collector (203); introducing heated air/fuel mixture into each engine cylinder of the engine; and
detecting oxygen concentration in the exhaust gas with heating said oxygen sensor (412; 115, 116).

15. An engine driving system branching an intake air to be supplied to a collector (203) across an air adjusting valve into a plurality of intake air passage (422) in an intake manifold (410; 202) for supplying into each engine cylinder, injecting fuel into intake air flow for driving the engine, the system being active at cold starting of the engine, comprising:
at least one fuel injector (401d; 250) provided in said collector (203) for injecting fuel into said collector (203) for forming an air/fuel mixture; and
a heating device (1) provided in said collector (203) for heating said air/fuel mixture within said collector (203).

16. An engine driving system branching an intake air to be supplied to a collector (203) across an air adjusting valve into a plurality of intake air passage (422) in an intake manifold (410; 202) for supplying into each engine cylinder, injecting fuel into intake air flow for driving the engine, the system being active at cold starting of the engine, comprising:
at least one fuel injector (401d; 250) provided in said collector (203) for injecting fuel into said collector (203) for forming an air/fuel mixture;
a heating device (1) provided in said collector (203) for heating said air/fuel mixture within said collector (203); and
a current control element (4) provided in said collector (203) for controlling current to be supplied to said heating device (1).

17. An engine driving system branching an intake air to be supplied to a collector (203) across an air adjusting valve into a plurality of intake air passage (422) in an intake manifold (410; 202) for supplying into each engine cylinder, injecting fuel into intake air flow for driving the engine, and detecting oxygen concentration in an exhaust gas by means of an oxygen sensor (412; 115, 116), the system being active at cold starting of the engine, comprising:
at least one fuel injector (401d; 250) provided in said collector (203) for injecting fuel into said collector (203) for forming an air/fuel mixture;
a first heating device (1) provided in said collector (203) for heating said air/fuel mixture within said collector (203); and
a first current control element (4) provided in said collector (203) for controlling current to be supplied to said heating device (1);
a second heating device (1) provided in said oxygen sensor (412; 115, 116) for heating a sensor element in said oxygen sensor (412; 115, 116); and
a second current control element (4) provided in said oxygen sensor (412; 115, 116) for controlling current to be supplied to said second heating device (1).

18. An air intake module for an internal combustion engine comprising:
a collector (203);
a throttle valve assembly (300) connected to said collector (203); an intake manifold (410; 202) connected with said collector (203) for introducing intake air into each engine cylinder;
a fuel injector (401d; 250) injecting fuel supplied into said intake manifold (410; 202);
a heat conductive body (2) defining a passage for said air/fuel mixture;
a heating device (1) thermally coupled with said heat conductive body (2) and generating heat to be transferred to said heat conductive body (2); and
a current control element (4) for controlling current to be supplied to said heating device (1) and thermally coupled with said heat conductive body (2) for transferring heat generated therein to said heat conductive body (2).
